Europäisches Patentamt

European Patent Office

Office européen des brevets

(19)

(11) Numéro de publication : **0 236 159**
**B1**

(12) FASCICULE DE BREVET EUROPÉEN

(45) Date de publication du fascicule du brevet :
26.04.89

(51) Int. Cl.⁴ : **F 16 F 15/12, F 16 D 13/70**

(21) Numéro de dépôt : **87400111.8**

(22) Date de dépôt : **19.01.87**

(54) Volant amortisseur pour transmission, notamment pour véhicule automobile.

(30) Priorité : **22.01.86 FR 8600854**

(43) Date de publication de la demande :
**09.09.87 Bulletin 87/37**

(45) Mention de la délivrance du brevet :
**26.04.89 Bulletin 89/17**

(84) Etats contractants désignés :
**DE ES FR GB IT**

(56) Documents cités :
**EP-A- 0 104 823**
**AU-A- 416 355**
**DE-A- 2 931 423**

(73) Titulaire : **VALEO**
**64 Avenue de la Grande Armée**
**F-75017 Paris (FR)**

(72) Inventeur : **Chasseguet, Gustave**
**2 Avenue Tournevent**
**F-95150 Taverny (FR)**
Inventeur : **Paquin, Jacques**
**83 Avenue de Verdun**
**F-92390 Villeneuve-la-Garenne (FR)**

(74) Mandataire : **CABINET BONNET-THIRION**
**95 Boulevard Beaumarchais**
**F-75003 Paris (FR)**

Jouve, 18, rue St-Denis, 75001 Paris, France

## Description

La présente invention concerne d'une manière générale les volants pour transmission, du type de ceux constituant usuellement une pièce d'inertie dans les embrayages, notamment dans les embrayages destinés à l'équipement des véhicules automobiles.

Elle vise plus particulièrement ceux de ces volants, ou volants amortisseurs, au sein desquels sont incorporés des moyens d'amortissement à l'égard d'éventuels couples de torsion.

Ainsi qu'on le sait, en effet, pour filtrer les vibrations susceptibles de prendre naissance tout au long de la chaîne cinématique que constitue une transmission, chaîne cinématique qui, sur un véhicule automobile, va du moteur aux arbres de roue, il est usuel d'insérer, dans une telle transmission, un dispositif amortisseur de torsion.

Le plus souvent, ce dispositif amortisseur de torsion est incorporé au disque de friction de l'embrayage.

Mais, en variante, ou en complément, il a déjà été également proposé d'incorporer un tel dispositif amortisseur de torsion au volant pour certaines applications particulières, notamment pour les véhicules dont le moteur développe un couple relativement notable aux faibles régimes de rotation, pour lequel une minimisation des bruits de « trash », c'est-à-dire des bruits apparaissant sous couple, doit être plus particulièrement recherchée.

C'est le cas, par exemple, pour le volant amortisseur faisant l'objet de la demande de brevet allemand No 29 31 423.

Globalement, un tel volant amortisseur comporte deux parties coaxiales montées rotatives l'une par rapport à l'autre, à savoir une première partie, qui comporte annulairement, à distance l'un de l'autre, deux flasques, et une deuxième partie, qui, entre lesdits flasques, comporte annulairement un voile formé lui aussi d'au moins un flasque, et en pratique de deux, avec, susceptibles d'intervenir entre lesdites parties, des moyens élastiques, lesdits moyens élastiques comportant des organes élastiques à action circonférentielle, qui sont disposés chacun individuellement dans des logements ménagés pour eux dans les flasques de la première partie, et avec lesquels sont aptes à interférer des bras appartenant au voile de la deuxième partie.

En pratique, dans les réalisations proposées, il est prévu, pour la configuration de repos de l'ensemble, un jeu circonférentiel entre les organes élastiques à action circonférentielle et les bras du voile de la deuxième partie qui doivent interférer avec eux, en sorte que ces organes élastiques à action circonférentielle n'interviennent pas pour les faibles valeurs du débattement angulaire relatif entre les deux parties, mais pour des valeurs plus élevées de celui-ci, seuls intervenant, pour lesdites faibles valeurs du débattement angulaire, des moyens de frottement prévus axialement entre lesdites parties.

Cette disposition présente des avantages, et notamment celui de la simplicité.

Mais elle présente également l'inconvénient de conduire, pour la configuration de repos de l'ensemble, à une position angulaire incertaine du voile de la deuxième partie par rapport aux flasques de la première partie, cette position angulaire correspondant simplement au moment où le couple à transmettre d'une desdites parties à l'autre devient inférieur au couple de frottement existant alors entre elles.

Du fait de cette position incertaine du voile de la deuxième partie, le jeu circonférentiel prévu entre les bras de ce voile et les organes élastiques à action circonférentiel avec lesquels ces bras doivent interférer se répartit de manière non contrôlée, et donc quasi inévitablement irrégulière, entre l'un et l'autre des sens circonférentiels, avec, éventuellement, une annulation de ce jeu circonférentiel pour l'un de ces sens circonférentiels, au détriment du fonctionnement de l'ensemble.

En outre, c'est avec une certaine violence, inévitablement génératrice de bruits, que, dans ces conditions, les bras du voile de la deuxième partie viennent circonférentiellement en contact avec les organes élastiques à action circonférentielle avec lesquels ils doivent interférer ou avec des organes interposés entre eux et ceux-ci.

Pour pallier ces inconvénients, il peut être envisagé de mettre en œuvre, entre les deux parties d'un tel volant amortisseur, des moyens élastiques de centrage, de manière à ce que, pour la configuration de repos de l'ensemble, il existe un jeu circonférentiel, tant dans un sens circonférentiel que dans l'autre, entre les organes élastiques à action circonférentielle intervenant circonférentiellement entre lesdites parties et les bras du voile de la deuxième desdites parties destinée à interférer avec ces derniers.

Mais le problème est alors d'assurer de manière simple l'implantation de ces organes élastiques de centrage, sans qu'il en résulte par ailleurs une quelconque autre interférence sur le fonctionnement de l'ensemble, et alors même que l'environnement dans lequel ils doivent être disposés est déjà particulièrement encombré.

La présente invention a d'une manière générale pour objet une disposition permettant de répondre de manière satisfaisante à cette double exigence.

De manière plus précise, elle a pour objet un volant amortisseur pour transmission, notamment pour véhicule automobile, du genre comportant deux parties coaxiales montées rotatives l'une par rapport à l'autre, à savoir une première partie, qui comporte annulairement, à distance l'un de l'autre, deux flasques, et une deuxième partie, qui, entre lesdits flasques, comporte annulairement un voile formé lui aussi d'au moins un flasque, avec, susceptibles d'intervenir entre lesdites parties, d'une part, pour les faibles valeurs de leur débattement angulaire relatif, des moyens de frottement, et, d'autre part, pour des valeurs plus élevées de ce débattement angulaire, en sus desdits moyens de frottement, des moyens élastiques, lesdits moyens élastiques comportant des organes élastiques à action circonférentielle, qui sont disposés chacun individuellement dans des logements ménagés pour eux dans les flasques de la première partie, et avec lesquels sont aptes à interférer des bras appartenant au voile de la deuxième partie, ce volant amortisseur étant d'une manière générale caractérisé en ce que, des moyens élastiques de centrage étant prévus entre lesdites parties de manière à ce que, pour la configuration de repos de l'ensemble, il existe un jeu circonférentiel, tant dans un sens circonférentiel que dans l'autre, entre les organes élastiques à action circonférentielle et les bras du voile de la deuxième partie, lesdits moyens· élastiques de centrage interviennent entre, d'une part, ledit voile, et, d'autre part, au moins une entretoise circonférentielle, qui, établie circonférentiellement entre deux desdits organes élastiques à action circonférentielle, prend circonférentiellement appui sur ceux-ci.

Par exemple, les moyens élastiques de centrage comportant plusieurs organes élastiques de centrage disposés chacun individuellement dans des logements ménagés pour eux dans le ou les flasques formant le voile de la deuxième partie, les entretoises circonférentielles mises en œuvre suivant l'invention pour favoriser l'intervention de tels moyens élastiques de centrage, à raison d'une par organe élastique, sont chacune constituées par une plaquette qui présente un évidement pour l'organe élastique de centrage correspondant.

En variante, ces organes élastiques de centrage étant des ressorts à boudin, c'est-à-dire des ressorts en fil enroulé en hélice, elles se réduisent chacune à deux doigts, qui, pour chaque organe élastique de centrage, s'étendent chacun respectivement à compter des deux extrémités circonférentielles d'un tel organe de centrage, d'un seul tenant avec celui-ci, lesdits doigts étant chacun formés par un prolongement, convenablement conformé, du fil constitutif de cet organe de centrage.

Quoi qu'il soit, le voile de la deuxième partie étant en pratique effectivement formé de deux flasques annulaires disposés axialement à distance l'un de l'autre, une entretoise circonférentielle suivant l'invention s'étend axialement de préférence entre ces deux flasques.

Il est ainsi avantageusement tiré parti de l'espace existant déjà, naturellement, entre ceux-ci, sans qu'il en résulte une augmentation notable de l'encombrement axial de l'ensemble, voire même une quelconque augmentation de celui-ci.

Les caractéristiques et avantages de l'invention ressortiront d'ailleurs de la description qui va suivre, à titre d'exemple, en référence aux dessins schématiques annexés sur lesquels :

la figure 1 est, avec des arrachements locaux, une vue partielle en élévation-coupe d'un volant amortisseur suivant l'invention, suivant la ligne brisée I-I de la figure 2 ;

la figure 2 est une vue partielle en coupe axiale de ce volant amortisseur, suivant la ligne II-II de la figure 1 ;

Les figures 3A, 3B sont des vues en élévation-coupe partielles, qui, reprenant chacune pour partie, à échelle supérieure, celle de la figure 1, illustrent chacune respectivement deux phases successives d'intervention du volant amortisseur suivant l'invention ;

les figures 4, 5 sont des vues partielles respectivement analogues à celles des figures 1, 2 et se rapportent à une première variante de réalisation ;

les figures 6, 7 sont également des vues partielles respectivement analogues à celles des figures 1, 2 et elles se rapportent, elles, à une deuxième variante de réalisation.

Tel qu'illustré sur ces figures, le volant amortisseur suivant l'invention comporte, globalement, deux parties coaxiales A, B montées rotatives l'une par rapport à l'autre.

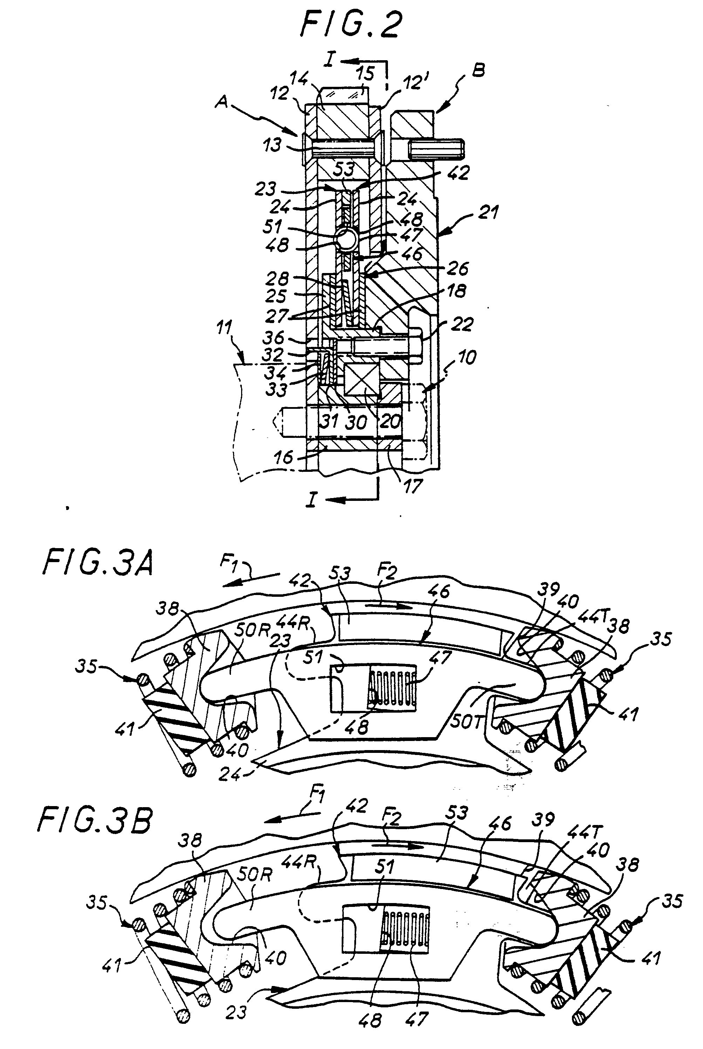

Par des vis 10, schématisées en traits interrompus à la figure 2, la partie A, ou partie d'entrée, est destinée à être solidarisée à un arbre 11, en pratique un arbre menant, par exemple l'arbre de sortie, ou vilebrequin, du moteur, dans le cas de l'équipement d'un véhicule automobile.

Cette partie A comporte, annulairement, autour de l'axe de l'ensemble, et à distance l'un de l'autre, deux flasques 12, 12'.

Par leur périphérie externe, ou de plus grand diamètre, ces flasques 12, 12' ont sensiblement même développement radial, et ils sont solidarisés l'un à l'autre, par exemple par des rivets 13, tel que représenté, avec insertion, entre eux, d'une entretoise annulaire 14.

Dans les formes de réalisation représentées, cette entretoise annulaire 14 présente une denture 15 à sa périphérie externe, et elle constitue donc par elle-même une couronne de démarreur pour l'ensemble.

Par leur périphérie interne, ou de plus petit diamètre, les flasques 12, 12' ont par contre des extensions radiales différentes : alors que le flasque 12 s'étend sensiblement jusqu'au voisinage immédiat de l'axe de l'ensemble, le flasque 12' s'arrête largement à distance de celui-ci.

A la périphérie interne du flasque 12 sont successivement accolées à celui-ci, du même côté que le flasque 12', deux rondelles annulaires 16, 17, qui, traversées, comme ledit flasque 12, par les vis 10, se trouvent solidarisées à ce flasque 12 par ces dernières.

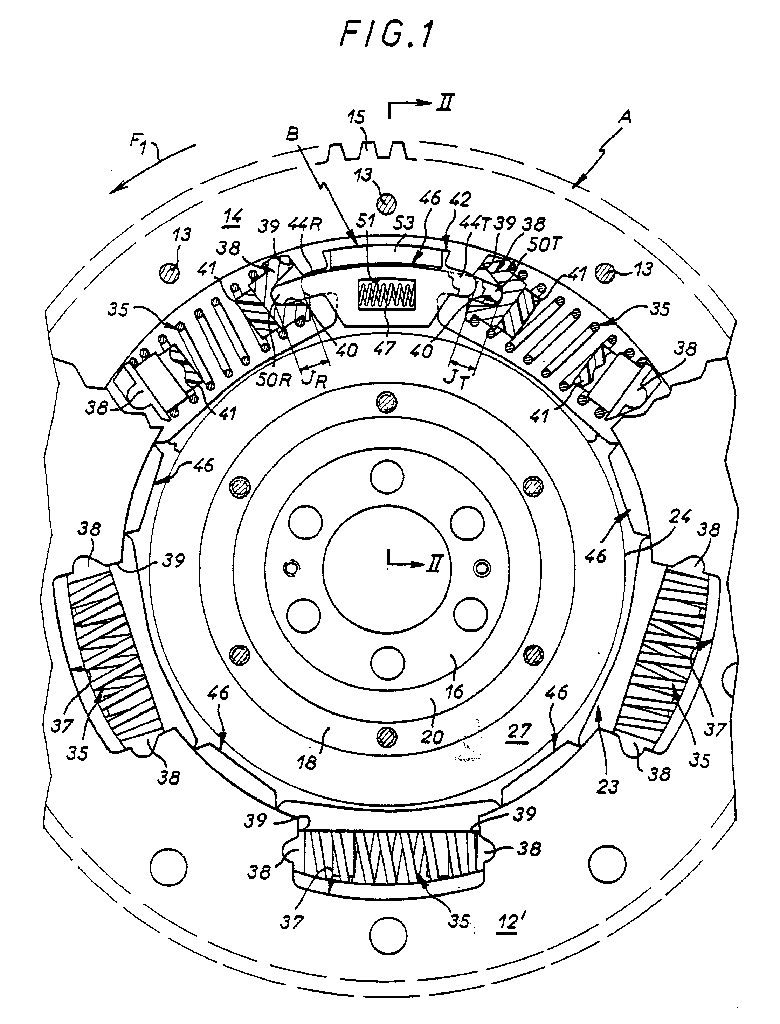

Tel que visible à la figure 1, des perçages taraudés peuvent cependant être prévus, par une solidarisation spécifique des rondelles 16, 17 au flasque 12, indépendamment de la fixation de l'ensemble sur l'arbre 11 concerné.

La partie B, ou partie de sortie, comporte, globalement, quant à elle, d'une part, un moyeu 18, qui entoure la rondelle 16 de la partie A, avec interposition, entre lui et cette dernière, d'un roulement 20 calé axialement entre cette rondelle 16 et la rondelle 17 qui lui est accolée, et, d'autre part, un flasque 21, qui, par des vis 22, est rapporté sur ledit moyeu 18 et est ainsi solidarisé en rotation à celui-ci.

Par ce flasque 21, qui, pour l'essentiel, s'étend à l'extérieur du volume défini par les flasques 12, 12' de la partie A, le volant amortisseur suivant l'invention est adapté à pouvoir servir de plateau de réaction pour un disque de friction, non représenté, et à être ainsi solidarisé en rotation, par frottement, à ce disque de friction, alors même que le moyeu de celui-ci est solidaire en rotation d'un deuxième arbre, en pratique un arbre mené, par exemple l'arbre d'entrée d'une boîte de vitesses dans le cas, plus particulièrement, concerné, de l'équipement d'un véhicule automobile.

La partie B comporte en outre, annulairement, entre les flasques 12, 12' de la partie A, un voile 23 formé lui aussi d'au moins un flasque 24.

En pratique, dans les formes de réalisation représentées, ce voile 23, qui s'étend autour du moyeu 18, entre le flasque 21 et une bride 25 que présente radialement en saillie ledit moyeu 18 à son extrémité opposée audit flasque 21, est formé de deux flasques annulaires 24 disposés axialement à distance l'un de l'autre, et son intervention au sein de la partie B concernée se fait par l'intermédiaire d'un limiteur de couple 26.

Dans les formes de réalisation représentées, ce limiteur de couple 26 met en œuvre deux rondelles de frottement 27, qui, chacune respectivement, encadrent le voile 23, en étant disposées, l'une entre ce voile 23 et le flasque 21, l'autre entre ce voile 23 et la bride radiale 25 du moyeu 18, et une rondelle élastique à action axiale 28, par exemple une simple rondelle Belleville, tel que représenté, qui, disposée axialement entre les deux flasques 24 constitutifs de ce voile 23, sollicite conjointement en serrage axial l'une et l'autre desdites rondelles de frottement 27, entre ladite bride 25 et l'un desdits flasques 24, pour l'une, et entre l'autre desdits flasques 24 et ledit flasque 21, pour l'autre.

Abstraction faite du limiteur de couple 26 ainsi constitué, le voile 23 de la partie B est libre en rotation autour du moyeu 18 de celle-ci.

Entre les parties A, B du volant amortisseur suivant l'invention sont susceptibles d'intervenir, tel que décrit plus en détail ci-après, d'une part, pour les faibles valeurs du débattement angulaire relatif entre lesdites parties A, B, des moyens de frottement, et, d'autre part, pour des valeurs plus élevées de ce débattement angulaire, des moyens élastiques.

Dans la forme de réalisation représentée, ces moyens de frottement comportent une rondelle de frottement 30, qui, disposée au contact du moyeu 18 de la partie B, du côté de celui-ci tourné vers le flasque 12 de la partie A, est portée par une rondelle de support 31 calée par des pattes axiales 32 sur ledit flasque 12, celles-ci étant engagées sans jeu circonférentiel dans des ajours 36 prévus à cet effet dans ce dernier, et qui est sollicitée en application axiale contre ledit moyeu 18 par une rondelle élastique à action axiale 33, en pratique une rondelle Belleville, intervenant entre ladite rondelle de support 32 et une rondelle de répartition 34 accolée audit flasque 12.

En pratique, la force de serrage développée par la rondelle élastique 33 est largement inférieure à celle développée par la rondelle élastique 28 précédente.

Quant aux moyens élastiques destinés à intervenir entre les parties A, B ils comportent des organes élastiques à action circonférentielle 35, qui sont au nombre de cinq dans la forme de réalisation représentée, et qui sont disposés chacun individuellement dans des logements 37 ménagés pour eux dans les flasques 12, 12' de la partie A.

En pratique, dans les formes de réalisation représentées, ces organes élastiques à action circonférentielle 35 sont des ressorts du type ressort à boudin, allongés sensiblement tangentiellement à une même circonférence de l'ensemble, et, à leurs extrémités circonférentielles, ils sont en appui sur des embouts ou coupelles 38, qui sont circonférentiellement interposés entre eux et les bords radiaux 39 des logements 37 dans lesquels ils sont disposés, et qui, du côté desdits bords radiaux 39, présentent chacun individuellement, en creux, une cuvette 40 à concavité tournée vers un tel bord radial 39.

Du côté opposé aux bords radiaux 39 des logements 37, ces embouts 38 portent, chacun, circonférentiellement en saillie, dans la forme de réalisation, un tampon en matière élastique 41.

Pour la configuration de repos de l'ensemble, les embouts 38 sont au contact des bords radiaux 39 des logements 37, sous la sollicitation des organes élastiques à action circonférentielle 35 qui s'étendent entre eux, et, éventuellement, ceux-ci sont alors sous précontrainte.

Avec les organes élastiques à action circonférentielle 35 sont aptes à interférer des bras 42 appartenant au voile 23 de la partie B, ces bras 42 s'étendant chacun individuellement radialement entre deux successifs de tels organes élastiques à action circonférentielle 35.

Comme ces derniers, ces bras 42 sont donc au nombre de cinq dans les formes de réalisation représentées.

Bien entendu, les bras 42 que présente ainsi le voile 23 sont chacun respectivement formés par des bras que présentent en correspondance l'un avec l'autre les deux flasques 24 constitutifs d'un tel voile 23.

Mais ces flasques 24 agissant en pratique conjointement à l'unisson l'un après l'autre, il sera considéré ici qu'ils constituent une seule et même unité, en l'espèce le voile 23.

Les bras 42 de ce voile 23 présentent chacun deux doigts 44T, 44R, qui s'étendent circonférentiellement en sens opposés l'un par rapport à l'autre, le doigt 44T s'étendant dans le sens circonférentiel supposé correspondre à un fonctionnement de l'ensemble, dit fonctionnement en « tirage », pour lequel se développe une évolution croissante du couple de rotation transitant par le volant amortisseur, tandis que le doigt 44R s'étend dans le sens circonférentiel opposé au précédent, et supposé, lui, correspondre à un fonctionnement en « rétro » dudit ensemble, pour lequel l'évolution dudit couple est au contraire décroissante.

Pour la configuration de repos de l'ensemble, les doigts 44T, 44R que présente ainsi chacun des bras 42 du voile 23 de la partie B sont l'un et l'autre circonférentiellement à distance du fond de la cuvette 40 des embouts 38 des organes élastiques à action circonférentielle 35 entre lesquels s'étend un tel bras 42, tout en étant éventuellement partiellement engagés dans une telle cuvette 40.

Autrement dit, pour la configuration de repos de l'ensemble, il y a un jeu circonférentiel entre lesdits bras 42 et lesdits embouts 38.

Suivant l'invention, des moyens élastiques de centrage étant prévus entre les parties A, B de manière à ce que, pour la configuration de repos de l'ensemble, ce jeu circonférentiel se répartisse à coup sûr entre l'un et l'autre des sens circonférentiels, ou autrement dit, qu'il existe alors effectivement un tel jeu circonférentiel tant dans un sens circonférentiel, JT, que dans le sens circonférentiel opposé, JR, entre les organes élastiques à action circonférentielle 35 et les bras 42 du voile 23 de la partie B, lesdits moyens élastiques de centrage interviennent entre, d'une part, le voile 23, et, d'autre part, au moins une entretoise circonférentielle 46, qui, établie circonférentiellement entre deux desdits organes élastiques à action circonférentielle 35, et, en pratique, entre deux successifs de tels organes élastiques à action circonférentielle 35, prend circonférentiellement appui sur ceux-ci.

Dans les formes de réalisation représentées, les moyens élastiques de centrage ainsi mis en œuvre interviennent entre au moins un bras 42 du voile 23 et au moins une entretoise circonférentielle 46.

Plus précisément, dans ces formes de réalisation, ils comportent plusieurs organes élastiques de centrage 47, en pratique au nombre de cinq, et ils interviennent entre les bras 42 du voile 23 et un nombre égal d'entretoises circonférentielles 46, celles-ci étant réparties à raison d'une par organe élastique de centrage 47, au droit des bras 42 du voile 23, et donc en alternance avec les organes élastiques à action circonférentielle 35.

En outre, dans ces formes de réalisation, les organes élastiques de centrage 47 sont de simples ressorts à boudin, et ils sont disposés chacun individuellement dans des logements 48 ménagés pour eux dans les flasques 24 formant le voile 23 de la partie B, et, plus précisément, dans les bras 42 de ce voile 23, en s'étendant sensiblement tangentiellement à une même circonférence de l'ensemble.

En pratique, ces logements 48 sont formés par des fenêtres ajourant localement lesdits bras 42.

En pratique, également, les organes élastiques de centrage s'étendent globalement suivant la même circonférence de l'ensemble que les organes élastiques à action circonférentielle 35.

Quoi qu'il en soit, axialement, les organes élastiques de centrage 47 sont, ainsi, pour l'essentiel, avantageusement, confinés dans le volume hors tout que définissent conjointement l'un avec l'autre les flasques 24 constitutifs du voile 23, en ne débordant éventuellement, et en pratique seulement très légèrement, de ce volume, qu'à la faveur des fenêtres de ces flasques 24 constituant leurs logements 48.

De préférence, et tel que représenté, pour une bonne adaptation de ces fenêtres au contour des organes élastiques de centrage 47, et un bon fonctionnement de ceux-ci, l'un au moins des bords circonférentiels desdites fenêtres est chanfreiné.

Quoi qu'il en soit, pour la configuration de repos de l'ensemble, les organes élastiques de centrage 47 s'étendent en pratique sans jeu circonférentiel dans leurs logements 48, et, éventuellement, ils y sont alors sous précontrainte.

En pratique, les entretoises circonférentielles 46 mises en œuvre suivant l'invention, qui, comme les organes élastiques de centrage 47, sont au nombre de cinq dans les formes de réalisation représentées, en s'étendant chacune individuellement entre deux organes élastiques à action circonférentielle 35, sont chacune disposées axialement entre les deux flasques 24 constitutifs du voile 23 de la partie B.

Elles présentent chacune deux doigts 50T, 50R, qui s'étendent chacun circonférentiellement en sens opposés, l'un, 50T, dans le sens circonférentiel correspondant au fonctionnement en « tirage » de l'ensemble, l'autre, 50R, dans le sens circonférentiel correspondant à un fonctionnement en « rétro » dudit ensemble, et qui, pour la configuration de repos de cet ensemble, sont chacun respectivement en appui contre le fond de la cuvette 40 des embouts 38 des organes élastiques à action circonférentielle 35 entre lesquels ils s'étendent.

Dans les formes de réalisation représentées sur les figures 1 à 5, les entretoises circonférentielles 46 mises en œuvre suivant l'invention sont chacune constituées par une plaquette 46 qui présente un évidement 51 pour l'organe élastique de centrage 47 correspondant.

Dans la forme de réalisation plus particulièrement représentée sur les figures 1 à 3, les plaquettes constituant ainsi ces entretoises circonférentielles 46 forment des pièces indépendantes les unes des autres, et, pour leur retenue radiale, le voile 23 de la partie B, et, plus précisément l'un au moins des flasques 24 constituant ce voile 23, présente axialement en saillie des barrettes 53, une pour chacune de ces entretoises circonférentielles 46.

En pratique, ces barrettes 53 s'étendent le long du bord circonférentiel de plus grand diamètre des bras 42 du voile 23 en cause, entre les flasques 24 constitutifs de celui-ci, en étant par exemple rapportées par collage sur l'un ou l'autre de ces flasques 24.

En service, et si, pour un fonctionnement en « tirage » de l'ensemble, il est supposé que ledit ensemble tourne autour de son axe suivant le sens circonférentiel repéré par une flèche F1 sur les figures 1 et 3, il y a un déplacement angulaire relatif entre les parties A et B du volant amortisseur suivant l'invention, et tout se passe comme si, tel que schématisé par la flèche F2 sur les figures 3A, 3B, la partie B se déplaçait angulairement, par rapport à la partie A, dans un sens circonférentiel opposé à celui repéré par la flèche F1 précédente.

Au cours d'une première phase, qui correspond aux faibles valeurs du débattement angulaire correspondant, seuls cèdent élastiquement les organes élastiques de centrage 47, la raideur de ceux-ci étant relativement faible, très largement inférieure, en tout cas, à celle, relativement forte, des organes élastiques à action circonférentielle 35.

Au cours de cette première phase de fonctionnement, seul intervient un glissement relatif des parties A, B l'une par rapport à l'autre au niveau de la rondelle de frottement 30, tout se passant comme si les organes élastiques à action circonférentielle 35 demeuraient rigides.

Cette première phase de fonctionnement se poursuit jusqu'à ce que, figure 3A, le doigt 44T des bras 42 du voile 23 de la partie B vienne en appui contre le fond de la cuvette 40 de l'embout 38 correspondant de l'organe élastique à action circonférentielle 35 immédiatement en aval d'un tel bras 42 dans le sens circonférentiel concerné.

Dès lors, et le débattement axial entre les parties A, B étant poursuivi, les organes élastiques à action circonférentielle 35 interviennent à leur tour, en sus de la rondelle de frottement 30, en se comprimant circonférentiellement, cependant que les organes élastiques de centrage 47 demeurent comprimés.

Cette deuxième phase de fonctionnement se poursuit jusqu'à ce qu'il y ait un entraînement positif de la partie B par la partie A, par venue en contact les uns des autres des tampons en matière élastique 41, avec éventuellement compression de ceux-ci.

Au cours de cette deuxième phase de fonctionnement, le doigt 50R des entretoises circonférentielles 46 s'écartent circonférentiellement du fond de la coupelle 40 de l'embout 38 correspondant de l'organe élastique à action circonférentielle 35 immédiatement en amont dans le sens circonférentiel concerné, mais, malgré les effets de la force centrifuge auxquels sont alors soumis ces entretoises circonférentielles 46, celles-ci demeurent convenablement en place, du fait qu'elles sont alors retenues par les barrettes 53 prévues à cet effet sur l'un des flasques 24 formant le voile de la partie B.

Les deux phases de fonctionnement précédentes correspondent à une évolution croissante du couple transitant par le volant amortisseur due à une action correspondante sur l'accélérateur du véhicule concerné.

Si cette action est relâchée, le couple transitant par le volant amortisseur évolue de manière décroissante, et un processus inverse du précédent se développe, suivant un fonctionnement dit en « rétro » de l'ensemble.

Prenant appui sur les entretoises circonférentielles 46 mises en œuvre suivant l'invention, et, par l'intermédiaire de celles-ci, sur les organes élastiques à action circonférentielle 35 supposés revenus à leur configuration initiale de repos, les organes élastiques de centrage 47 assurent, pour la position de point mort de la boîte de vitesses associée, le retour à sa position initiale de repos du voile 23 de la partie B, et, par celui-ci, de cette partie B et des organes calés angulairement sur elle.

Outre le centrage ainsi assuré pour le voile 23 de la partie B, les organes élastiques de centrage 47, qui sont eux aussi à action circonférentielle, constituent avantageusement un étage de faible raideur intervenant avant l'étage de forte raideur constitué corollairement par les organes élastiques à action circonférentielle 35.

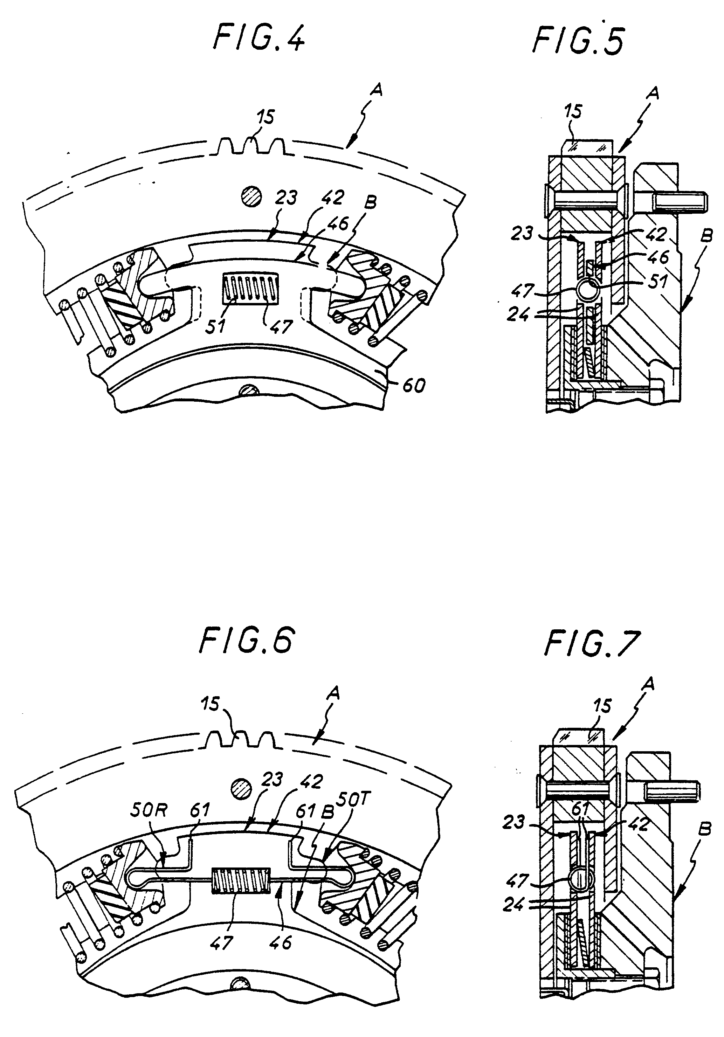

Dans la variante de réalisation illustrée par les figures 4, 5, les plaquettes constituant les entretoises circonférentielles 46 sont circonférentiellement reliées les unes aux autres par une même rondelle de support 60, qui est commune à l'ensemble de ces entretoises circonférentielles 46, et qui assure donc elle-même la retenue radiale de celles-ci.

Dans la forme de réalisation représentée, cette rondelle de support 60 s'étend suivant le bord circonférentiel de plus petit diamètre des entretoises circonférentielles 46, mais il va de soi que, en variante, elle pourrait aussi bien s'étendre suivant leur bord circonférentiel de plus grand diamètre.

Suivant la variante de réalisation illustrée par les figures 6, 7, les entretoises circonférentielles 46 se réduisent chacune à leurs doigts 50R, 50T.

En pratique, ces doigts 50R, 50T, qui s'étendent chacun respectivement à compter des deux extrémités circonférentielles de l'organe élastique de centrage 47 correspondant sont alors d'un seul tenant avec un tel organe élastique de centrage 47, en étant chacun formé d'un prolongement, convenablement conformé, du fil constitutif de celui-ci.

Dans la forme de réalisation représentée, les doigts 50T, 50R dans lesquels se réduisent ainsi chacune des entretoises circonférentielles 46 suivant l'invention ont chacun une configuration en U, en présentant, en bout de leur aile libre, un retour en équerre 61 dirigé radialement en direction opposée à l'axe de l'ensemble.

De tels retours en équerre 61 facilitent la manipulation de l'ensemble que constituent un organe élastique de centrage 47 et les doigts 50T, 50R qui le prolongent, et donc la mise en place de cet ensemble.

Ils contribuent en outre à son maintien entre les flasques 24 formant le voile 23 de la partie B.

Dans ce qui précède, il n'a volontairement pas été tenu compte du limiteur de couple 26.

Si, au cours du fonctionnement, le couple transitant par le volant amortisseur dépasse une valeur déterminée, il se produit, au niveau de ce limiteur de couple 26, un glissement relatif l'une par rapport à l'autre des deux parties coaxiales A, B qui le constituent.

Il en est de même en cas de résonance entre celles-ci.

Bien entendu, la présente invention ne se limite pas aux formes de réalisation décrites et représentées, mais englobe toute variante d'exécution et/ou de combinaison de leurs divers éléments.

En particulier, les bras du voile de la deuxième partie destinés à interférer avec les organes élastiques à action circonférentielle intervenant entre elle et la première partie peuvent éventuellement être circonférentiellement reliés d'un seul tenant entre eux par une partie dudit voile s'étendant radialement au delà desdits organes élastiques à action circonférentielle, ladite partie de ce voile définissant alors avec lesdits bras et sa partie courante des fenêtres propres au logement de ces organes élastiques à action circonférentielle.

En outre, les organes élastiques de centrage 47 peuvent être disposés sur une circonférence de diamètre différent de celui de la circonférence suivant laquelle s'étendent les organes élastiques à action circonférentielle 35.

Par exemple, s'agissant de la forme de réalisation illustrée par les figures 4, 5, les organes élastiques de centrage 47 pourraient être disposés dans des fenêtres pratiquées dans la rondelle de support 60, des fenêtres étant conjointement prévues en correspondance avec les précédentes dans les flasques 24 constitutifs du voile 23.

Il en reste de même même si, au lieu de s'étendre le long du bord circonférentiel de plus petit diamètre des entretoises circonférentielles 46, cette rondelle de support 60 s'étend le long du bord circonférentiel de plus grand diamètre de celles-ci, les flasques 24 constitutifs du voile 23 comportant alors, comme indiqué ci-dessus, pour constitution des fenêtres nécessaires aux organes élastiques de centrage 47, une partie qui s'étend radialement au-delà des organes élastiques à action circonférentielle 35.

Dans l'un et l'autre cas, les organes élastiques de centrage 47 peuvent être décalés circonférentiellement par rapport aux bras 42 du voile 23.

Par ailleurs, lorsque les organes élastiques de centrage 47 mis en œuvre sont en nombre pair, ils peuvent être disposés en opposition, suivant les dispositions décrites dans le brevet français N° 2 268 994 du 24 avril 1974.

Enfin, il n'est pas indispensable qu'une pluralité de tels organes élastiques de centrage 47 soient mis en œuvre.

Au contraire, un seul de tels organes élastiques de centrage 47 peut suffire, et donc aussi une seule entretoise circonférentielle 46.

## Revendications

1. Volant amortisseur pour transmission, notamment pour véhicule automobile, du genre comportant deux parties coaxiales (A, B) montées rotatives l'une par rapport à l'autre à savoir, une première partie (A) qui comporte annulairement, à distance l'un de l'autre deux flasques (12, 12'), et une deuxième partie (B) qui, entre lesdits flasques (12, 12') comporte annulairement un voile (23) formé lui aussi d'au moins un flasque (24) avec, susceptibles d'intervenir entre lesdites parties, d'une part, pour les faibles valeurs de leur débattement angulaire relatif, des moyens de frottement, et, d'autre part, pour des valeurs plus élevées dudit débattement angulaire, en sus desdits moyens de frottement, des moyens élastiques, lesdits moyens élastiques comportant des organes élastiques à action circonférentielle (35), qui sont disposés chacun individuellement dans des logements (36) ménagés pour eux dans les flasques (12, 12') de la première partie (A), et avec lesquels sont aptes à interférer des bras (42) appartenant au voile (23) de la deuxième partie (B), caractérisé en ce que, des moyens élastiques de centrage étant prévus entre lesdites parties (A, B) de manière à ce que, pour la configuration de repos de l'ensemble, il existe un jeu circonférentiel, tant dans un sens circonférentiel (JT), que dans l'autre (JR), entre les organes élastiques à action circonférentielle (35) et les bras (42) du voile (23) de la deuxième partie (B), lesdits moyens élastiques de centrage interviennent entre d'une part ledit voile (23), et d'autre part au moins une entretoise circonférentielle (46), qui, établie circonférentiellement entre deux desdits organes élastiques à action circonférentielle (35), prend circonférentiellement appui sur ceux-ci.

2. Volant amortisseur suivant la revendication 1, caractérisé en ce que les moyens élastiques de centrage interviennent entre au moins un bras (42) du voile (23) et au moins une entretoise circonférentielle (46).

3. Volant amortisseur suivant l'une quelconque des revendications 1, 2, caractérisé en ce que, les organes élastiques à action circonférentielle (35) étant en appui, à leurs extrémités circonférentielles, sur des embouts (38), qui sont circonférentiellement interposés entre eux et les bords radiaux (39) correspondants des logements (37) dans lesquels ils sont disposés, et qui, du côté desdits bords radiaux (39), présentent chacun individuellement, en creux, une cuvette (40) à concavité tournée vers un tel bord radial (39), une entretoise circonférentielle (46) présente deux doigts (50T, 50R), qui s'étendent circonférentiellement, l'un dans un sens circonférentiel, l'autre dans le sens circonférentiel opposé, et qui, pour la configuration de repos de l'ensemble, sont chacun respectivement en appui contre le fond de la cuvette (40) des embouts (38) entre lesquels ils s'étendent.

4. Volant amortisseur suivant l'une quelconque des revendications 1 à 3, caractérisé en ce que le voile (23) de la deuxième partie (B) étant formé de deux flasques annulaires (24) disposés axialement à distance l'un de l'autre, une entretoise circonférentielle (46) s'étend axialement entre ces deux flasques (24).

5. Volant amortisseur suivant l'une quelconque des revendications 1 à 4, caractérisé en ce que, pour la retenue radiale d'une entretoise circonférentielle (46), le voile (23) de la deuxième partie (B) présente axialement en saillie une barrette (53).

6. Volant amortisseur suivant l'une quelconque des revendications 1 à 5, caractérisé en ce que les moyens élastiques de centrage comportent au moins un organe élastique de centrage (47) disposé dans un logement (48) ménagé pour lui dans le voile (23) de la deuxième partie (B).

7. Volant amortisseur suivant la revendication 6, caractérisé en ce qu'il y a plusieurs organes élastiques de centrage (47) et un nombre égal d'entretoises circonférentielles (46), à raison d'une par organe élastique de centrage (47).

8. Volant amortisseur suivant l'une quelconque des revendications 6, 7, caractérisé en ce qu'une entretoise circonférentielle (46) est constituée par une plaquette qui présente un évidement (51) pour l'organe élastique de centrage (47) correspondant.

9. Volant amortisseur suivant les revendications 7, 8, prises conjointement, caractérisé en ce que les plaquettes constituant les entretoises circonférentielles (46) forment des pièces indépendantes les unes des autres.

10. Volant amortisseur suivant les revendications 7, 8, prises conjointement, caractérisé en ce que les plaquettes constituant les entretoises circonférentielles (46) sont circonférentiellement reliées les unes aux autres par une même rondelle de support (60).

11. Volant amortisseur suivant l'une quelconque des revendications 6 à 10, caractérisé en ce que, pour la configuration de repos de l'ensemble, un organe élastique de centrage (47) s'étend sans jeu circonférentiel dans l'évidement (51) de la plaquette constituant l'entretoise circonférentielle (46) correspondante.

12. Volant amortisseur suivant l'une quelconque des revendications 6, 7, caractérisé en ce qu'une entretoise circonférentielle (46) se réduit à deux doigts (50T, 50R) qui, pour l'organe élastique de centrage (47) correspondant, s'étendent chacun respectivement à compter des deux extrémités circonférentielles d'un tel organe élastique de centrage (47).

13. Volant amortisseur suivant la revendication 12, caractérisé en ce que, l'organe élastique de centrage (47) étant un ressort à boudin, les doigts (50T, 50R) constituant l'entretoise circonférentielle (46) qui lui est associée sont d'un seul tenant avec lui, ces doigts (50T, 50R) étant chacun formés par un prolongement, convenablement conformé, du fil constitutif d'un tel organe élastique de centrage (47).

14. Volant amortisseur suivant l'une quelconque des revendications 6 à 13, caractérisé en ce que, pour la configuration de repos de l'ensemble, un organe élastique de centrage (47) s'étend sans jeu circonférentiel dans le logement (48) ménagé pour lui dans le voile (23) de la deuxième partie (B).

**Claims**

1. A damper-type flywheel for a transmission system, especially for automobile vehicles, of the kind comprising two coaxial parts (A, B) mounted to be rotatable relative to one another, namely, a first part (A) which comprises two spaced annular flanges (12, 12') and a second part (B) which comprises an annular projecting element (23) formed of at least one flange (24) between the said flanges (12, 12'), having, on the one hand, for low values of relative angular displacement, friction means able to operate between the said parts and, on the other hand, for larger values of the said angular displacement, elastic means operative in addition to the friction means, the said elastic means comprising circumferentially acting spring members (35) which are each individually disposed in openings (36) made for them in the flanges (12, 12') of the first part (A), and with which arms (42) forming part of the projecting element (23) of the second part (B) are adapted to interact, characterized in that spring centering means are provided between the said parts (A, B) so that in the inoperative configuration of the assembly there is a clearance both in one circumferential direction (JT) and in the other (JR) between the circumferentially acting spring members (35) and the arms (42) of the projecting element (23) of the second part (B), the said spring centering means operating between, on the one hand, the said projecting element (23) and, on the other hand, at least one circumferential spacer (46) which, situated circumferentially between the two said circumferentially acting spring members (35), bears on them circumferentially.

2. A damper-type flywheel according to Claim 1, characterized in that the spring centering means operate between at least one arm (42) of the projecting element (23) and at least one circumferential spacer (46).

3. A damper-type flywheel according to any one of Claims 1 and 2, characterized in that the circumferentially acting spring members (35) bear at their circumferential ends on capping pieces (38) which are circumferentially interposed between them and the corresponding radial edges (39) of the housings (37) in which they are accommodated and which, facing the said radial edges (39) each individually present a dished surface (40) having a concavity turned towards the radial edge (39), and a circumferential spacer (46) comprises two fingers (50T, 50R) extending circumferentially in opposite circumferential directions, each of which in the inoperative configuration of the assembly bears on the bottom of the dished surface (40) of the capping pieces (38) between which they extend.

4. A damper-type flywheel according to any one of Claims 1 to 3, characterized in that the projecting element (23) of the second part (B) is formed from two axially spaced annular flanges (24) and a circumferential spacer (46) extends axially between the two flanges (24).

5. A damper-type flywheel according to any one of Claims 1 to 4, characterized in that the projecting element (23) of the second part (B) comprises an axially projecting bar (53) for the radial retention of a circumferential spacer (46).

6. A damper-type flywheel according to any one of Claims 1 to 5, characterized in that the spring centering means comprise at least one spring centering member (47) disposed in an opening (48) made for it in the projecting element (23) of the second part (B).

7. A damper-type flywheel according to Claim 6, characterized in that there is a plurality of spring centering members (47) and an equal number of circumferential spacers (46), one per spring centering member (47).

8. A damper-type flywheel according to any one of Claims 6 and 7, characterized in that a circumferential spacer (46) is constituted by a plate with an opening (51) for the corresponding spring centering member (47).

9. A damper-type flywheel according to Claims 7 and 8 taken together, characterized in that the plates constituting the circumferential spacers (46) are independent of one another.

10. A damper-type flywheel according to Claims 7 and 8 taken together, characterized in that the plates constituting the circumferential spacers (46) are connected circumferentially to one another by a common support ring (60).

11. A damper-type flywheel according to any one of Claims 6 to 10, characterized in that in the inoperative configuration a spring centering member (47) extends without circumferential clearance in the opening (51) of the plate constituting the corresponding circumferential spacer (46).

12. A damper-type flywheel according to any one of Claims 6 and 7, characterized in that a circumferential spacer (46) is reduced to two fingers (50T, 50R) which extend respectively from the two circumferential ends of the corresponding spring centering member (47).

13. A damper-type flywheel according to Claim 12, characterized in that the spring centering member (47) is a helical coil spring and the fingers (50T, 50R) constituting the circumferential spacer (46) associated with it are in one piece with it, these fingers (50T, 50R) each being formed by an appropriately shaped prolongation of the wire constituting such a spring centering member (47).

14. A damper-type flywheel according to any one of Claims 6 to 13, characterized in that in the inoperative configuration of the assembly, a spring centering member (47) extends without clearance in the opening (48) made for it in the projecting element (23) of the second part (B).

**Patentansprüche**

1. Stoßdämpferrad für Getriebe, insbesondere für ein Kraftfahrzeug, der Art, die zwei koaxiale Teile (A, B) enthält, welche im Verhältnis zueinander drehbar angeordnet sind, nämlich einen ersten Teil (A), der ringförmig in einem Abstand zueinander zwei Flansche (12, 12') enthält, und einen zweiten Teil (B), der zwischen den genannten Flanschen (12, 12') ringförmig eine Schale (23) enthält, die ihrerseits aus wenigstens einem Flansch (24) besteht, versehen einerseits mit Reibelementen, die bei geringen Werten des relativen Winkelbereichs zwischen den genannten Teilen wirksam werden können, und andererseits, zusätzlich zu den genannten Reibelementen, mit elastischen Elementen für höhere Werte des genannten Winkelbereichs, wobei die genannten elastischen Elemente am Umfang angreifende elastische Organe (35) aufweisen, die jeweils einzeln in Aufnahmen (36) angeordnet sind, die dafür in den Flanschen (12, 12') des ersten Teils (A) vorgesehen sind, und worin Arme (42) eingreifen können, die zur Schale (23) des zweiten Teils (B) gehören, dadurch gekennzeichnet, daß elastische Zentrierelemente zwischen den genannten Teilen (A, B) so vorgesehen sind, daß bei Ruhestellung der Einheit sowohl in Umfangsrichtung (JT) als auch in der anderen Richtung (JR) zwischen den am Umfang angreifenden elastischen Organen (35) und den Armen (42) der Schale (23) des zweiten Teils (B) ein Umfangsspiel vorhanden ist und dadurch die genannten elastischen Zentrierelemente zwischen der genannten Schale (23) einerseits und wenigstens einem Umfangszwischenstück (46) andererseits wirksam werden, welches am Umfang zwischen zwei der genannten, am Umfang wirksamen elastischen Organe (35) vorgesehen ist und daher am Umfang darauf aufliegt.

2. Stoßdämpferrad gemäß Anspruch 1, dadurch gekennzeichnet, daß die elastischen Zentrierelemente wenigstens zwischen einem Arm (42) der Schale (23) und wenigstens einem Umfangszwischenstück (46) wirksam werden.

3. Stoßdämpferrad gemäß einem der Ansprüche 1, 2, dadurch gekennzeichnet, daß die am Umfang angreifenden elastischen Organe (35) an ihren Umfangsenden auf Ansätzen (38) aufliegen, die am Umfang zwischen diesen und den entsprechenden radialen Rändern (39) der Aufnahmen (37), worin sie angeordnet sind, eingefügt sind, und die auf der Seite der genannten radialen Ränder (39) jeweils einen Hohlnapf (40) aufweisen, der zu einem derartigen radialen Rand (39) hin konkav ausgebildet ist, und daß ein Umfangszwischenstück (46) zwei Zapfen (50T, 50R) aufweist, die am Umfang entlang verlaufen, der eine in Umfangsrichtung, der andere entgegen der Umfangsrichtung, und die bei Ruhekonfiguration der Einheit jeweils am Boden des Napfs (40) der Ansätze (38), zwischen denen sie liegen, aufliegen.

4. Stoßdämpferrad gemäß einem der Ansprüche 1 bis 3, dadurch gekennzeichnet, daß die Schale (23) des zweiten Teils (B) aus zwei ringförmigen Flanschen (24) besteht, die axial in einem Abstand zueinander angeordnet sind, und daher axial zwischen diesen beiden Flanschen (24) ein Umfangszwischenstück (46) liegt.

5. Stoßdämpferrad gemäß einem der Ansprüche 1 bis 4, dadurch gekennzeichnet, daß die Schale (23) des zweiten Teils (B) zur radialen Befestigung eines Umfangszwischenstücks (46) axial vorspringend einen Steg (53) aufweist.

6. Stoßdämpferrad gemäß einem der Ansprüche 1 bis 5, dadurch gekennzeichnet, daß die elastischen Zentrierelemente wenigstens ein elastisches Zentrierorgan (47) enthalten, welches in einer Aufnahme (48) angeordnet ist, die dafür in der Schale (23) des zweiten Teils (B) vorgesehen ist.

7. Stoßdämpferrad gemäß Anspruch 6, dadurch gekennzeichnet, daß mehrere elastische Zentrierelemente (47) und eine gleiche Anzahl Umfangszwischenstücke (46) vorhanden sind, und zwar jeweils ein Stück pro elastischem Zentrierelement (47).

8. Stoßdämpferrad gemäß einem der Ansprüche 6, 7, dadurch gekennzeichnet, daß ein Umfangszwischenstück (46) aus einem Plättchen besteht, welches eine Aussparung (51) für das entsprechende elastische Zentrierelement (47) aufweist.

9. Stoßdämpferrad gemäß den Ansprüchen 7 und 8 zusammengenommen, dadurch gekennzeichnet, daß die die Umfangszwischenstücke (46) bildenden Plättchen voneinander unabhängige Teile sind.

10. Stoßdämpferrad gemäß den Ansprüchen 7 und 8 zusammengenommen, dadurch gekennzeichnet, daß die die Umfangszwischenstücke (46) bildenden Plättchen am Umfang miteinander durch ein und dieselbe Trägerscheibe (60) verbunden sind.

11. Stoßdämpferrad gemäß einem der Ansprüche 6 bis 10, dadurch gekennzeichnet, daß sich bei Ruhekonfiguration der Einheit ein elastisches Zentrierelement (47) ohne Umfangsspiel in die Aussparung (51) des Plättchens erstreckt, welches das entsprechende Umfangszwischenstück (46) bildet.

12. Stoßdämpferrad gemäß einem der Ansprüche 6, 7, dadurch gekennzeichnet, daß ein Umfangszwischenstück (46) sich auf zwei Zapfen (50T, 50R) reduziert, die für das entsprechende elastische Zentrierelement (47) jeweils von den beiden Umfangsenden eines solchen elastischen Zentrierelements (47) ausgehen.

13. Stoßdämpferrad gemäß Anspruch 12, dadurch gekennzeichnet, daß das elastische Zentrierelement (47) eine Schraubenfeder ist und daher die Zapfen (50T, 50R), die das zugehörige Umfangszwischenstück (46) bilden, damit aus einem Stück bestehen, wobei diese Zapfen (50T, 50R) jeweils aus einer entsprechend ausgebildeten Verlängerung des Drahts bestehen, der ein solches elastisches Zentrierelement (47) bildet.

14. Stoßdämpferrad gemäß einem der Ansprüche 6 bis 13, dadurch gekennzeichnet, daß sich bei Ruhekonfiguration der Einheit ein elastisches Zentrierelement (47) ohne Umfangsspiel in die Aufnahme (48) erstreckt, die dafür in der Schale (23) des zweiten Teils (B) vorgesehen ist.

FIG.1

EP 0 236 159 B1

# FIG.2

# FIG.3A

# FIG.3B

## FIG.4

## FIG.5

## FIG.6

## FIG.7